# FASCICULE DE BREVET EUROPEEN

(11) **EP 0 964 287 B1**
(45) Date de publication et mention de la délivrance du brevet: **12.11.2003**
(21) Numéro de dépôt: 98110815.2
(22) Date de dépôt: 12.06.1998
(51) Int. Cl.: G02F 1/13, G02F 1/1337, G02F 1/1339

(54) **Dispositif d'affichage électro-optique à cristaux liquides et procédé de fabrication d'un tel dispositif**
Elektrooptische Flüssigkristallanzeigevorrichtung und Herstellungsverfahren derselben
Electro-optical liquid crystal display device and method of manufacturing of the same

(43) Date de publication de la demande: 15.12.1999
(73) Titulaire: ASULAB S.A., 2074 Marin (CH)
(72) Inventeur: Grupp, Joachim, 2003 Neuchâtel (CH); Blanckaert, Nicolas, 2000 Neuchâtel (CH); Bouvier, Manuel, 1012 Lausanne (CH)
(74) Mandataire: Ravenel, Thierry Gérard Louis

(56) Documents cités:
- EP-A- 0 772 071
- GB-A- 2 307 057
- US-A- 4 653 864
- T YA MARUSII & YU A REZNIKOV: "PHOTOSENSITIVE ORIENTANTS FOR LIQUID CRYSTAL ALIGNMENT" MOL. MAT., vol. 3, no. 2, 1993, pages 161-168, XP002083983
- WEST J L ET AL: "POLARIZED UV-EXPOSED POLYIMIDE FILMS FOR LIQUID-CRYSTAL ALIGNMENT" 1995 SID INTERNATIONAL SYMPOSIUM DIGEST OF TECHNICAL PAPERS, ORLANDO, MAY 23 - 25, 1995, no. VOL. 26, mai 1995, pages 703-705, XP000645899 SOCIETY FOR INFORMATION DISPLAY

## Description

La présente invention a pour objet un dispositif d'affichage électro-optique à cristaux liquides comprenant des espaceurs ainsi qu'un procédé de fabrication d'un tel dispositif.

Elle concerne le secteur industriel de la fabrication d'écrans de visualisation à cristaux liquides, formés de deux plaques ou substrats rapprochés en verre, en quartz, en silicium ou autre, entre lesquelles est formée une enceinte étanche dans laquelle sont confinés les cristaux liquides.

Ces écrans à cristaux liquides comprennent notamment des couches dites d'alignement déposées sur les faces en regard des deux substrats, et qui servent à aligner et orienter les molécules du cristal liquide. Le conditionnement de la surface de ces couches d'alignement est très important, car c'est de lui que dépend l'orientation des molécules et, par conséquent, le contraste de l'affichage.

Une première technique connue pour former les couches d'alignement consiste à déposer des matières d'alignement telles que SiO₂, MgF₂, WO₃, MoO₃ ou autre suivant un angle d'incidence déterminé sur la surface des substrats. Pour déposer ces matières d'alignement sur la surface des substrats selon l'angle d'incidence voulu, on dispose une source de vaporisation avec l'inclinaison choisie par rapport à une droite perpendiculaire à la surface des substrats. Parmi les procédés de déposition appropriés, on peut citer le dépôt sous vide, le procédé de pulvérisation et d'autres procédés connus de dépôts en phase vapeur.

Une autre technique connue pour former les couches d'alignement consiste à appliquer, par exemple par centrifugation, une matière d'alignement telle que le polyimide en solution à la surface des substrats. La solution de polyimide à l'état non polymérisé reste non polymérisée après évaporation par séchage du solvant. Dans une étape de fabrication ultérieure, la cellule d'affichage à cristaux liquides est chauffée, par exemple pendant une heure à environ 250°C, ce qui provoque la polymérisation des couches d'alignement en polyimide. Après polymérisation, les couches d'alignement sont frottées.

Les cellules d'affichage à cristaux liquides du genre susdécrit comportent également des espaceurs destinés à maintenir une distance ou écartement constant entre les deux plaques des cellules et à conférer à ces dernières une rigidité mécanique satisfaisante. Dans les procédés connus à ce jour, le maintien de la distance entre les deux plaques est généralement assuré par des billes ou des fibres discontinues de dimensions géométriques parfaitement contrôlées, répandues sur l'une des plaques et collées avant mise en place de la seconde plaque. Cette technique initiale présentant certains inconvénients tels que, notamment, un positionnement peu précis des billes pouvant entraîner, localement, une déformation mécanique des cellules, il a été proposé de remplacer ces billes par des espaceurs continus, formés de fils ou de barres de section carrée, circulaire, polygonale ou autre. Ces fils ou barres, par exemple en verre ou en quartz, sont fixés par collage, soudage, ou scellement soit sur une seule des deux plaques, leur hauteur étant égale à l'espacement recherché, soit sur chacune des plaques de manière à s'entrecroiser, les séries d'espaceurs assurant l'espacement entre les plaques et conférant à la cellule résultante la rigidité mécanique recherchée.

Ces espaceurs, qu'il s'agisse de billes, de fibres coupées, de barres continues ou autres, présentent néanmoins l'inconvénient de perturber l'alignement des molécules de cristal liquide, ce qui empêche la rotation de la polarisation. On voit alors apparaître différents problèmes dont les plus notables sont les suivants :
- formation de domaines perturbés provoquant une diminution du contraste, ou produisant le phénomène dit de "basculement inverse" qui affecte l'uniformité de l'affichage ;
- perte d'alignement après une longue période de fonctionnement ;
- formation de halos autour des segments activés résultants d'un angle de basculement trop faible des molécules de cristal liquide.

Pour remédier à ces problèmes, le brevet JP 10003082 propose de réaliser des billes d'espacement sous forme de fines particules de matière plastique obtenues par polymérisation d'une émulsion d'un monomère de type fluorine, connu pour ses propriétés d'alignement des molécules de cristal liquide. Toutefois, les billes de polymère résultant de ce procédé présentent une structure amorphe, de sorte que les molécules de cristal liquide tendent à s'aligner radialement autour d'elles. Ainsi, même si, au voisinage de ces billes, l'alignement des molécules de cristal liquide est plus ordonné, cet alignement diffère néanmoins encore sensiblement de l'alignement planaire homogène ou homéotrope du cristal liquide dans le reste du volume de la cellule d'affichage. Même à un degré moindre, les problèmes de diminution du contraste et de non uniformité de l'affichage subsistent donc.

La présente invention a donc pour but de remédier aux inconvénients ci-dessus et à d'autres encore en proposant des espaceurs qui ne perturbent pas l'alignement des molécules de cristaux liquides.

A cet effet, l'invention concerne une cellule d'affichage à cristaux liquides comportant deux substrats rapprochés, séparés par un cadre de scellement qui délimite une enceinte étanche dans laquelle sont confinés les cristaux liquides, et des espaceurs destinés à maintenir un écartement constant entre lesdits substrats, cette cellule étant caractérisée en ce que le cadre de scellement et/ou les espaceurs sont formés d'un polymère anisotrope de structure ordonnée à longue distance qui sert à aligner et à orienter les molécules de cristaux liquides.

Grâce à cette caractéristique, les axes principaux des molécules de polymère s'alignent selon une direction privilégiée, alignement qui est transféré par effet de surface aux molécules de cristal liquide. A leur tour, celles-ci vont, en fonction de l'orientation des molécules de polymère, s'aligner de manière planaire homogène ou homéotrope au droit des espaceurs, de la même façon que dans le reste du volume de la cellule d'affichage. L'invention permet ainsi d'éviter les phénomènes de perturbation de l'alignement des molécules de cristal liquide qui se produisent habituellement au voisinage des espaceurs ou des cadres de scellement classiques. On obtient ainsi un affichage plus fiable, présentant un meilleur contraste et dépourvu de halos ou de points d'affichage parasites.

La présente invention concerne également un procédé de fabrication d'une cellule d'affichage du genre susmentionné tel que revendiqué dans la revendication 7.

D'autres caractéristiques et avantages de la présente invention apparaîtront plus clairement à la lecture de la description détaillée qui suit d'un exemple de mise en oeuvre du procédé selon l'invention, cet exemple étant donné à titre purement illustratif et non limitatif, en liaison avec les dessins annexés dans lesquels :
- les figures 1 à 3 sont des vues schématiques partielles d'une cellule d'affichage selon l'invention, et
- les figures 4 et 5 sont des vues schématiques illustrant deux modes de mise en oeuvre du procédé selon l'invention.

La présente invention procède de l'idée générale inventive qui consiste à réaliser les espaceurs des cellules d'affichage à cristaux liquides en une matière favorisant l'alignement des molécules de cristal liquide au voisinage de ces espaceurs.

La présente invention va être décrite en référence à des espaceurs classiquement utilisés pour maintenir un écartement constant entre les deux substrats d'une cellule d'affichage à cristaux liquides et conférer à cette dernière une rigidité mécanique suffisante. Dans le cas d'espaceurs continus sous forme de barres, ceux-ci peuvent également être employés pour assurer le confinement et la séparation de cristaux liquides de types différents en constituant les parois qui délimitent les canaux de remplissage desdits cristaux liquides dans une cellule d'affichage par exemple polychrome. Enfin, le concept inventif peut être étendu de manière analogue au cadre de scellement des cellules d'affichage, permettant d'obtenir une surface d'affichage utile plus importante.

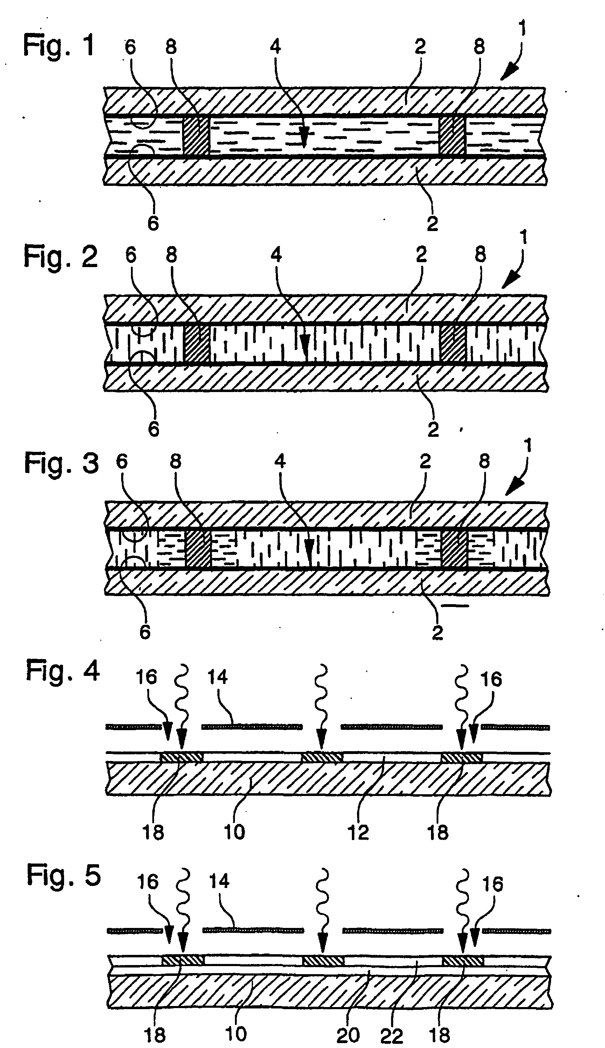

Les figures 1 à 3 sont des vues schématiques partielles d'une cellule d'affichage désignée dans son ensemble par la référence numérique générale 1. Cette cellule comprend classiquement deux plaques ou substrats rapprochés tels que 2 en verre, en quartz, en silicium ou autre, entre lesquelles est formée une enceinte étanche dans laquelle sont confinées les molécules de cristal liquide 4. Les axes principaux des molécules de cristal liquide 4 sont représentés sur les figures par des traits interrompus. Des couches d'alignement telles que 6 sont déposées sur les faces en regard des deux substrats 2. Elles servent à aligner et orienter les molécules de cristal liquide 4. Dans l'exemple représenté à la figure 1, les molécules de cristal liquide 4 sont alignées de manière planaire homogène, c'est-à-dire que leurs axes principaux s'étendent selon une direction privilégiée parallèlement à la surface des couches d'alignement 6. Dans les exemples représentés aux figures 2 et 3, les molécules de cristal liquide 4 sont alignées de manière homéotrope, c'est-à-dire que leurs axes principaux s'étendent selon une direction privilégiée perpendiculairement à la surface des couches d'alignement 6.

Les substrats 2 sont classiquement maintenus écartés, à distance constante l'un de l'autre, au moyen d'espaceurs tels que 8. Ces espaceurs 8 sont formés de fils ou de barres de section carrée, circulaire, polygonale ou autre.

Conformément à l'invention, les espaceurs 8 sont réalisés en un polymère anisotrope qui sert à aligner et à orienter les molécules de cristal liquide 4. Lorsque le cristal liquide 4 est de type smectique, le polymère sera choisi dans le groupe constitué notamment, par les polyamides, les polyimides (voir, par exemple, l'article intitulé "Polarized UV-exposed polyimide films for liquid-crystal alignment" paru dans SID 95 Digest, pp. 703-705) et certains diacrylates tels que le phénylène (p-alkyloxyacrylate)benzoate. Lorsque le cristal liquide 4 est de type nématique ou cholestérique, le polymère sera choisi dans le groupe constitué notamment par les coumarines et les polyvinylcinnamates (voir, par exemple, l'article intitulé "Photosensitive orientants for liquid crystal alignment" paru dans Mol. Mat., 1993, Vol. 3, pp. 161-168). Il va de soi que d'autres polymères qui polymérisent à l'état anisotrope peuvent être utilisés dans le cadre de la présente invention. On peut également choisir certains cristaux liquides qui polymérisent de manière anisotrope et deviennent solides. Le polymère anisotrope peut également être un polymère de cristal liquide à chaîne latérale.

A la figure 1, on constate que les molécules de cristal liquide 4 sont alignées , au voisinage des espaceurs 8, de manière planaire homogène par rapport aux couches d'alignement 6, comme dans le reste du volume de la cellule d'affichage 1. De même, à la figure 2, les molécules de cristal liquide 4 sont alignées, au voisinage des espaceurs 8, de manière homéotrope par rapport aux couches d'alignement 6, comme dans le reste du volume de la cellule d'affichage 1. Enfin, la figure 3 représente une situation mixte dans laquelle les molécules de cristal liquide 4 sont alignées, au voisinage des espaceurs, de manière planaire homogène par rapport aux couches d'alignement 6, tandis que ces mêmes molécules sont alignées de manière homéotrope par rapport auxdites couches d'alignement 6 dans le reste du volume de la cellule d'affichage 1. Le cas où certains espaceurs 8 d'une cellule d'affichage 1 favorisent un alignement planaire des molécules de cristal liquide 4, tandis que les autres espaceurs 8 induisent un alignement homéotrope de ces mêmes molécules, peut également être envisagé.

Selon l'avantage essentiel de l'invention, les molécules de polymère des espaceurs 8 polymérisent selon une structure macroscopique anisotrope ordonnée à longue distance. Les axes principaux de ces molécules de polymère s'alignent donc pendant la polymérisation selon une direction privilégiée bien définie, ce qui va induire l'alignement planaire homogène ou homéotrope des molécules de cristal liquide 4 par un effet de surface bien connu de l'homme du métier. Il est ainsi possible de contrôler de manière très précise l'alignement des molécules de cristal liquide 4, ce qui permet d'obtenir un meilleur contraste pour l'affichage, et favorise la commutation électrique des cristaux liquides 4. Ces résultats s'avèrent particulièrement avantageux, notamment pour les cristaux liquides de type cholestérique ou ferroélectrique, dont les performances sont intéressantes pour un grand nombre d'applications, mais dont l'état bistable est extrêmement sensible aux défauts d'alignement. L'invention présente également un grand intérêt pour les écrans d'affichage miniaturisés, par exemple les systèmes diffractifs pour la projection, dont la tolérance est faible vis-à-vis des perturbations au droit des espaceurs.

Les configurations mixtes décrites ci-dessus permettent notamment une commutation uniforme. En effet, dans le cas des cristaux liquides nématiques à anisotropie diélectrique négative, l'alignement planaire homogène des molécules de cristal liquide 4 dans le voisinage des espaceurs 8 selon l'invention provoque, lorsqu'on applique un champ électrique, une vague de basculement desdites molécules dans le plan de la figure. Au contraire, dans l'art antérieur, le basculement uniforme des molécules de cristal liquide est très difficile à obtenir, et nécessite la mise en oeuvre de techniques coûteuses.

De même, la présente invention favorise la relaxation des défauts d'orientation provoqués par les commutations électriques. En effet, dans le cas des cristaux liquides ferroélectriques, des commutations électriques fréquentes peuvent provoquer des défauts d'alignement souvent irréversibles. Une transition uniforme et graduelle de l'orientation des molécules de cristal liquide 4 au voisinage des espaceurs 8 provoque la relaxation réversible de ces défauts, et permet de conserver les propriétés optiques non dégradées.

Un premier procédé de fabrication des espaceurs 8 selon l'invention est décrit en référence à la figure 4. Il s'agit d'un procédé de photolithographie dans lequel un substrat 10 est recouvert d'une couche de monomère 12 sur laquelle est déposé un masque de photolithographie 14. Ce masque 14 présente des ouvertures 16 dont le contour correspond à la forme des espaceurs 18 que l'on cherche à obtenir. La couche de monomère 12 est ensuite irradiée à travers les ouvertures 16 du masque 14, par exemple au moyen d'un faisceau ultraviolet polarisé. Les surfaces exposées de la couche de monomère 12 polymérisent à l'état anisotrope sous l'effet de la radiation incidente. On comprendra que l'orientation des molécules de polymère dépend de la polarisation de la radiation incidente, et que celle-ci peut être modifiée en modifiant la polarisation de ladite radiation. Finalement, le masque de photolithographie 14 est retiré, et le monomère non exposé est éliminé au moyen d'un solvant approprié.

Un autre procédé de fabrication des espaceurs 8 selon l'invention est décrit en référence à la figure 5. Il s'agit également d'un procédé de photolithographie dans lequel le substrat 10 est recouvert d'une couche d'alignement 20 classique, par exemple une couche de polyimide frotté. On dépose ensuite sur cette couche d'alignement 20 une couche 22 d'un monomère mésogène de cristal liquide, puis le masque de photolithographie 14. Il y a transfert de l'alignement de la couche d'alignement 20 à la couche 22 de monomère. Cette couche 22 est ensuite irradiée à travers les ouvertures 16 du masque de photolithographie 14, par exemple au moyen d'un rayonnement ultraviolet non polarisé. Les surfaces exposées de la couche 22 de monomère mésogène polymérisent de manière anisotrope, et deviennent solides. Finalement, le monomère non exposé est éliminé au moyen d'un solvant approprié.

Il va de soi que diverses modifications et variantes simples entrent dans le cadre de la présente invention.

## Revendications

1. Cellule d'affichage à cristaux liquides comportant deux substrats (2) rapprochés, séparés par un cadre de scellement qui délimite une enceinte étanche dans laquelle sont confinés les molécules de cristal liquide (4), et des espaceurs (8) destinés à maintenir un écartement constant entre lesdits substrats (2), **caractérisée en ce que** le cadre de scellement et/ou les espaceurs (8) sont formés d'un polymère anisotrope de structure ordonnée à longue distance qui sert à aligner et à orienter les molécules de cristaux liquides.

2. Cellule d'affichage selon la revendication 1, **caractérisée en ce que** le polymère est choisi dans le groupe constitué par les polyamides, les polyimides et les diacrylates.

3. Cellule d'affichage selon la revendication 1, **caractérisée en ce que** le polymère est choisi dans le groupe constitué par les coumarines et les polyvinylcinnamates.

4. Cellule d'affichage selon la revendication 1, **caractérisée en ce que** le polymère est obtenu par polymérisation d'un monomère mésogène de cristal liquide.

5. Cellule d'affichage selon la revendication 1, **caractérisée en ce que** le polymère anisotrope est un polymère de cristal liquide à chaîne latérale.

6. Cellule d'affichage selon l'une quelconque des revendications 1 à 5, **caractérisée en ce que** les espaceurs (8) sont formés d'un fil ou d'une barre.

7. Procédé de fabrication d'une cellule d'affichage à cristaux liquides selon l'une quelconque des revendications 1 à 6, **caractérisé en ce qu'**il comprend les étapes qui consistent à
- revêtir un substrat (10) d'une couche d'alignement (20),
- déposer sur la couche d'alignement (20) une couche (22) d'un monomère mésogène de cristal liquide qui polymérise à l'état solide, puis un masque (14) présentant des ouvertures (16) dont le contour correspond à la forme du cadre de scellement ou des espaceurs (8) recherchés,
- irradier la couche (22) à travers les ouvertures (16) du masque (14) au moyen d'un rayonnement non polarisé, et
- retirer le masque (14) et éliminer le monomère non exposé.

8. Procédé selon la revendication 7, **caractérisé en ce que** le rayonnement utilisé pour irradier la couche de monomère (12. 22) est un rayonnement ultraviolet.

## Claims

1. Liquid crystal display cell including two close substrates (2), separated by a sealing frame which delimits a sealed enclosure in which the liquid crystal molecules (4) are confined, and spacers (8) intended to maintain a constant spacing between said substrates (2), **characterised in that** the sealing frame and/or the spacers (8) are formed of a long distance ordered structure anisotropic polymer which is used to align and orient the liquid crystal molecules.

2. Display cell according to claim 1, **characterised in that** the polymer is selected from the group formed by the polyamides, polyimides and diacrylates.

3. Display cell according to claim 1, **characterised in that** the polymer is selected from the group formed by the coumarins and polyvinlycinnamates.

4. Display cell according to claim 1, **characterised in that** the polymer is obtained via polymerisation of a liquid crystal mesogenic monomer.

5. Display cell according to claim 1, **characterised in that** the anisotropic polymer is a lateral chain liquid crystal polymer.

6. Display cell according to any one of claims 1 to 5, **characterised in that** the spacers (8) are formed of a wire or a bar.

7. Method for manufacturing a liquid crystal display cell according to any one of claims 1 to 6, **characterised in that** it includes the steps of:
- coating a substrate (10) with an alignment layer (20);
- depositing over the alignment layer (20) a layer (22) of liquid crystal mesogenic monomer which polymerises to the solid state, then a mask (14) having openings (16) whose contour corresponds to the shape of the desired sealing frame or spacers (8);
- irradiating the layer (22) through the openings (16) of the mask (14) by means of a non polarised beam, and
- removing the mask (14) and the non exposed monomer.

8. Method according to claim 7, **characterised in that** the beam used for irradiating the monomer layer (12, 22) is an ultraviolet beam.

## Patentansprüche

1. Flüssigkristallanzeigezelle mit zwei benachbarten Substraten (2), die durch eine Einfassung getrennt sind, die einen abgedichteten Raum begrenzt, in welchem die Flüssigkristallmoleküle (4) eingeschlossen sind, und mit zwei Abstandshaltern (8), die dazu bestimmt sind, einen konstanten Abstand zwischen den beiden Substraten (2) zu erhalten, **dadurch gekennzeichnet, daß** die Einfassung und/oder die Abstandshalter (8) aus einem anisotropen Polymer mit in Längsrichtung geordneter Struktur gebildet sind, der dazu dient, die Flüssigkristallmolekülel auszurichten und zu orientieren.

2. Anzeigezelle nach Anspruch 1, **dadurch gekennzeichnet, daß** der Polymer aus der Gruppe der Polyamide, der Polyimide und der Diacrylate gewählt ist.

3. Anzeigezelle nach Anspruch 1, **dadurch gekennzeichnet, daß** der Polymer aus der Gruppe der Cumarine und der Polyvinylcinnamate gewählt ist.

4. Anzeigezelle nach Anspruch 1, **dadurch gekennzeichnet, daß** der Polymer durch Polymerisation eines mesogenen Flüssigkristallmonomers erhalten wird.

5. Anzeigezelle nach Anspruch 1, **dadurch gekennzeichnet, daß** der anisotrope Polymer ein Flüssigkristallpolymer mit seitlicher Kette ist.

6. Anzeigezelle nach einem der Ansprüche 1 bis 5, **dadurch gekennzeichnet, daß** die Abstandshalter (8) aus einem Faden oder einem Stab gebildet sind.

7. Verfahren zum Herstellen einer Flüssigkristallanzeigezelle nach einem der Ansprüche 1 bis 6, **dadurch gekennzeichnet, daß** es die folgenden Schritte umfaßt:
- Beschichten eines Substrats (10) mit einer Ausrichtschicht (20),
- Aufbringen auf der Ausrichtschicht (20) einer Schicht (22) eines mesogenen Flüssigkristallmonomers, der zu einem festen Zustand polymerisiert, darauf einer Maske (14), die Öffnungen (16) aufweist, deren Kontur der Form der Einfassung oder der gewünschten Abstandshalter (8) entspricht,
- Bestrahlen der Schicht (22) durch die Öffnungen (16) der Maske (14) mittels einer nicht polarisierenden Strahlung und
- Entfernen der Maske (14) und Abtragen des nicht exponierten Monomers.

8. Verfahren nach Anspruch 7, **dadurch gekennzeichnet, daß** die zum Bestrahlen der Monomerschicht (12, 22) verwendete Strahlung eine ultraviolette Strahlung ist.
